# EUROPEAN PATENT SPECIFICATION

(11) **EP 2 642 102 B1**
(45) Date of publication and mention of the grant of the patent: **22.08.2018**
(21) Application number: 10859673.5
(22) Date of filing: 19.11.2010
(51) Int. Cl.: F02D 21/08, F01N 3/20, F01N 3/24, F02D 9/02, F02D 23/00, F02D 41/06, F02D 43/00, F02D 41/02, F02D 41/00

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 25.09.2013
(73) Proprietor: TOYOTA JIDOSHA KABUSHIKI KAISHA, Toyota-shi, Aichi-ken, 471-8571 (JP)
(72) Inventor: KOGO, Tomoyuki, Toyota-shi, Aichi-ken, 471-8571 (JP); OGAWA, Takashi, Toyota-shi, Aichi-ken, 471-8571 (JP); ITO, Katsuhiro, Toyota-shi, Aichi-ken, 471-8571 (JP); IWATA, Kazuyasu, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2010/070736
(87) International publication number: WO 2012/066684

(56) References cited:
- EP-A1- 1 452 712
- EP-A1- 2 208 877
- JP-A- 2003 020 981
- JP-A- 2003 065 121
- JP-A- 2003 097 308
- JP-A- 2005 048 745
- US-A1- 2007 186 538

## Description

### [TECHNICAL FIELD]

The present invention relates to a control apparatus for an internal combustion engine.

### [BACKGROUND ART]

In an internal combustion engine (particularly, a diesel engine), reduction in emission is achieved by placing, in an exhaust passage, an exhaust purification device including a purification catalyst that purifies hydrocarbon (HC), carbon monoxide (CO), and nitrogen oxide (NOx) contained in exhaust gas, and a particulate filter (a diesel particulate filter, hereinafter referred to as DPF) that collects particulate matter (hereinafter referred to as PM).

To achieve appropriate purification performance, the exhaust purification device is required to maintain a temperature that is equal to or higher than the temperature at which the purification catalyst is put into an active state. Therefore, in reducing exhaust emissions, it is essential to heat (warm up) the exhaust purification device to a temperature within the active-state temperature range immediately after a start of the internal combustion engine. To satisfy such a requirement, Patent Document 1 discloses a technique concerning the control to accelerate warm-up of the exhaust purification device. By this technique, a throttle valve is closed at the time of low power, and the air excess ratio is adjusted to a smaller value than a target value, prior to completion of the warm-up of the diesel engine. As a result, the exhaust gas temperature is raised, and the warm-up of the exhaust purification device is accelerated.

EP 1 452 712 A1 as the next-coming prior art discloses a Diesel engine being operated in a first warm-up mode in an early warm-up period after startup so as to accelerate activation of the catalyst, and then in a second warm-up mode in a late warm-up period after the early warm-up period so as to maintain activity of the catalyst. The first warm-up mode provides more energy to the catalyst with exhaust gases than the normal operation mode of the diesel engine. The second warm-up mode provides exhaust gases of higher temperature to the catalyst than the normal operation mode.

EP 2 208 877 A1 discloses a control apparatus for an internal combustion engine, which can generate exhaust pressure pulsation at an early period while suppressing the degradation of volumetric efficiency, when a request to enhance the exhaust pressure pulsation is made in the internal combustion engine which includes a variable valve mechanism that makes variable a valve overlap period, and a variable nozzle type turbocharger. When a request to enhance the exhaust pressure pulsation (acceleration request) is detected at a first time point, the opening degree of the variable nozzle is fully closed and the valve overlap period is zero, and when it is detected at a second time point at which the exhaust pressure pulsation is judged to have been enhanced, the opening degree of the variable nozzle is opened to an opening degree with a high turbo efficiency and the valve overlap period is set so as to overlap with a timing at which a trough of the exhaust pressure pulsation comes.

Patent Documents 2 and 3 disclose other techniques considered relevant to the present invention.

### [PRIOR ART DOCUMENTS]

### [PATENT DOCUMENTS]

[Patent Document 1] Japanese Patent Application Publication No. 2003-129883
[Patent Document 2] Japanese Patent Application Publication No. 2003-041983
[Patent Document 3] Japanese Patent Application Publication No. 2009-138733

### [SUMMARY OF THE INVENTION]

### [PROBLEMS TO BE SOLVED BY THE INVENTION]

To raise the temperature of the exhaust purification device, it is effective to increase the amount of fuel injection of the internal combustion engine and raise the exhaust gas temperature. When the internal combustion engine is in a low-power range during a warm-up operation after a start of the engine, for example, the purification catalyst is in a low-temperature state (an inactive state), and therefore, exhaust gas cannot be appropriately purified. In view of this, control to reduce the amount of fuel injection to prevent degradation of emission is normally performed in the low-power range of the internal combustion engine in such a manner as not to affect the torque requested by the driver. Therefore, it is difficult to promptly raise the exhaust gas temperature. Also, in a diesel engine, part of exhaust gas energy is normally used by a supercharger placed on the upstream side of the exhaust purification device, and as a result, the temperature of the exhaust gas flowing into the exhaust purification device becomes lower. Therefore, it is difficult to accelerate a temperature rise in the exhaust purification device.

The present invention has been made in view of the above circumstances, and an object thereof is to provide an internal combustion engine control apparatus that can accelerate the temperature rise in the exhaust purification device.

### [MEANS FOR SOLVING THE PROBLEMS]

This object is solved by the subject matter of claim 1. To achieve the above object, a control apparatus for an internal combustion engine of the present invention is characterized by comprising: an exhaust purification device purifying exhaust gas from the internal combustion engine, the exhaust purification device being provided in an exhaust passage of the internal combustion engine; an EGR passage provided with an EGR valve that causes the exhaust passage on an upstream side of the exhaust purification device to communicate with an intake passage to return part of the exhaust gas to the intake passage and thus adjusts an amount of the exhaust gas returning to the intake passage; a shutoff valve that is provided near an exhaust gas inlet portion of the EGR passage and is capable of reducing an exhaust-system volume that is a sum of volumes of the exhaust manifold, the exhaust passage and the EGR of the internal combustion engine by shutting of the EGR passage; and temperature detecting means detecting a temperature of the exhaust gas purification device, wherein, when a result of the detection performed by the temperature detecting means is smaller than a predetermined threshold value, the cutoff valve shuts off the EGR passage to reduce the exhaust-system volume, and thus increases an amplitude of an exhaust pulse of the exhaust gas flowing into the exhaust gas purification device. In the above described structure, when the temperature of the exhaust purification device is lower than the activating temperature, the inflow control unit can increase the amount of exhaust gas flowing into the exhaust purification device by restraining exhaust gas from flowing into the exhaust gas recirculation passage. Thus, the temperature rise in the exhaust purification device can be accelerated.

Further, the control apparatus for the internal combustion engine of the present invention may be configured to further comprise: a supercharger performing supercharging with intake air by using exhaust gas energy, the supercharger being provided in the exhaust passage located on a downstream side of the EGR passage and on the upstream side of the exhaust purification device; a supercharging pressure control unit controlling a supercharging pressure of the intake air by changing energy availability of exhaust gas at the supercharger; and an output detecting unit detecting on output of the internal combustion engine, wherein, when the result of the detection performed by the temperature detecting unit is smaller than the predetermined threshold value, and a result of the detection performed by the output detecting unit is equal to or greater than a predetermined threshold value, the supercharging pressure control unit lowers the energy availability of the exhaust gas at the supercharger.

In the above described structure, when the temperature of the exhaust purification device is lower than the activating temperature, and the internal combustion engine is in a medium/high-power range, exhaust gas with a higher energy (or a higher temperature) can be made to flow into the exhaust purification device by lowering the energy availability of the exhaust gas at the supercharger. Thus, the temperature rise in the exhaust purification device can be accelerated.

### [EFFECTS OF THE INVENTION]

According to the present invention, the temperature rise in the exhaust purification device can be accelerated.

### [BRIEF DESCRIPTION OF THE DRAWINGS]

FIG. 1 is a diagram showing an example structure of an engine system of an embodiment;
FIG. 2 is a cross-sectional view of an example structure of a cylinder of the engine of the embodiment;
FIG. 3 shows an example of correlations between the intake and exhaust pressures of the engine and the crank angle;
FIG. 4 shows an example of a correlation between the exhaust-system volume of the engine and the exhaust pulse amplitude;
FIG. 5 shows an example of a correlation between the exhaust-system volume of the engine and the engine output; and
FIG. 6 is a flowchart showing an example operation of the engine ECU.

### [MODES FOR CARRYING OUT THE INVENTION]

The following is a detailed description of modes for carrying out the invention, with reference to the accompanying drawings.

### [Embodiment]

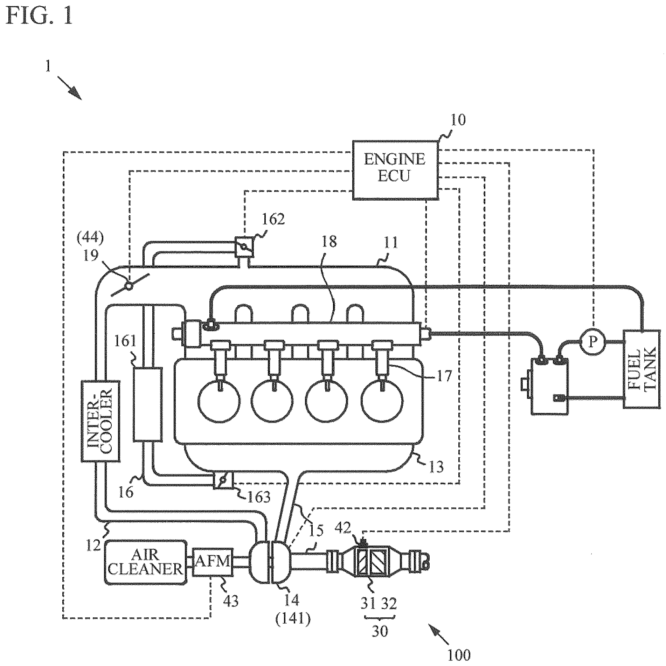

Referring to the drawings, an embodiment of the present invention is now described. FIG. 1 is a diagram showing an example structure of an engine system 1 on which an internal consumption engine control apparatus of the present invention is mounted. It should be noted that FIG. 1 shows only part of the structure of an engine.

The engine system 1 shown in FIG. 1 includes an engine 100 as a power source, and an engine ECU (Electronic Control Unit) 10 that integrally controls operations of the engine 100. The engine 100 includes a turbocharger 14 and an exhaust purification device 30 on the downstream side of an exhaust manifold 13, and an electric VVT mechanism 16 and a hydraulic VVT mechanism 27 that change the valve timings of an intake valve 22 and an exhaust valve 23. The engine 100 also includes a shutoff valve at the exhaust gas inlet portion of an EGR passage 16. The engine 100 includes a diesel throttle 19 that adjusts the amount of intake air in an intake passage 12. The engine 100 further includes a temperature sensor 42 that detects temperature of a purification catalyst 31 in the exhaust purification device 30. The engine 100 also includes a crank angle sensor 41 that detects an angle of rotation of a crank shaft 21.

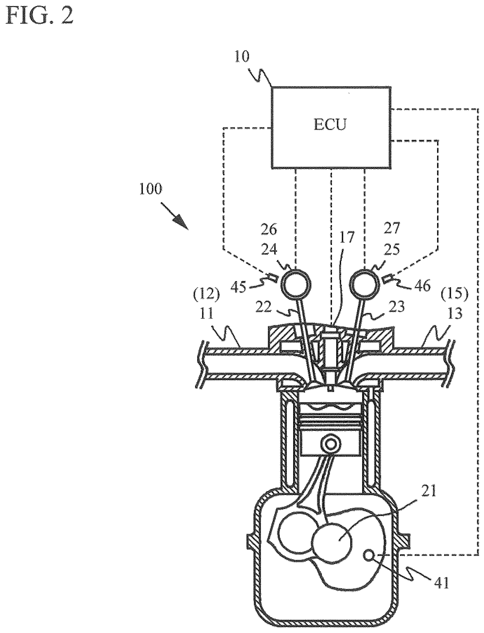

FIG. 2 is a cross-sectional view of an example structure of a cylinder of the engine 100 of the embodiment. The engine 100 is a multicylinder diesel engine mounted on a vehicle, and each cylinder has a piston forming a fuel chamber. The piston of each fuel chamber is slidably engaged with a cylinder of the engine 100, and is connected to the crank shaft 21 as an output shaft via a connecting rod.

Based on information about the amount of intake air from an airflow meter 43, information about the position of the piston from the crank angle sensor 41, and the like, the engine ECU 10 determines the fuel injection amount and the fuel injection timing, and sends a signal to an injector 17. In accordance with the signal from the engine ECU 10, the injector 17 injects the designated amount of fuel into the fuel chamber at the designated injection time. The fuel injected from the injector 17 is atomized in the fuel chamber, and forms an air-fuel mixture with intake air that flows into the fuel chamber when the intake valve is opened. The air-fuel mixture is compressed and ignited in the fuel chamber by upward motion of the piston. The air-fuel mixture is thus combusted to expand the fuel chamber and move the piston downward. This downward motion is transformed into shaft rotation of the crank shaft 21 via the connecting rod. Thus, the engine 100 obtains power. In this case, the engine 100 is preferably a diesel engine that uses light oil as its fuel, but is not limited to that.

It should be noted that the engine 100 is an example structure of an internal combustion engine of the present invention.

The crank angle sensor 41 is placed near the crank shaft 21. The crank angle sensor 41 is designed to detect an angle of rotation of the crank shaft 21, and transmits detection results to the engine ECU 10. With that, the engine ECU 10 obtains information about the crank angle, such as the rotation frequency and the rotational angular velocity of the crank shaft 21 in operation. Based on the rotation frequency and the rotational angular velocity of the crank shaft 21, the engine ECU 10 calculates an engine rotation frequency and an engine torque, and recognizes an output of the engine 100.

It should be noted that the crank angle sensor 41 is an example structure of the output detecting unit of the present invention.

There are intake valves and exhaust valves in each fuel chamber. FIG. 2 shows one intake valve and one exhaust valve. At each intake port of a fuel chamber, an intake valve 22 is provided, and an intake cam shaft 24 for opening and closing the intake valve 22 is provided. At each intake port of the fuel chamber, an exhaust valve 23 is further provided, and an exhaust cam shaft 25 for opening and closing the exhaust valve 23 is provided.

The intake valve 22 and the exhaust valve 23 are opened and closed by rotation of the intake cam shaft 24 and the exhaust cam shaft 25 to which rotation of the crank shaft 21 is transferred through a connection mechanism (such as a timing belt or a timing chain), and connect or cut off the intake port and the exhaust port to and from the fuel chamber. The phases of the intake valve 22 and the exhaust valve 23 are indicated on the basis of the crank angle.

The intake cam shaft 24 includes an electric VVT mechanism 26 that is a variable valve timing mechanism (hereinafter referred to as a VVT mechanism). This electric VVT mechanism 26 rotates the intake cam shaft 24 with an electric motor in accordance with an instruction from the engine ECU 10. With that, the rotational phase of the intake cam shaft 24 with respect to the crank shaft 21 is changed, and the valve timing of the intake valve 22 is changed accordingly. In this case, the rotational phase of the intake cam shaft 24 is detected by an intake cam angle sensor 45, and is output to the engine ECU 10. With that, the engine ECU 10 can acquire the phase of the intake valve 22, as well as the phase of the intake cam shaft 24. The phase of the intake cam shaft 24 is also indicated on the basis of the crank shaft.

The exhaust cam shaft 25 includes a hydraulic VVT mechanism 27. This hydraulic VVT mechanism 27 rotates the exhaust cam shaft 25 with an oil control valve (hereinafter referred to as the OCV) in accordance with an instruction from the engine ECU 10. With that, the rotational phase of the exhaust cam shaft 25 with respect to the crank shaft 21 is changed, and the valve timing of the exhaust valve 23 is changed accordingly. In this case, the rotational phase of the exhaust cam shaft 25 is detected by an exhaust cam angle sensor 46, and is output to the engine ECU 10. With that, the engine ECU 10 can acquire the phase of the exhaust valve 23, as well as the phase of the exhaust cam shaft 25. The phase of the exhaust cam shaft 25 is also indicated on the basis of the crank shaft.

Referring back to FIG. 1, the engine 100 includes a common-rail fuel injection system that is formed with injectors 17, a common rail 18, a low-pressure fuel pump, a high-pressure fuel pump, and the like. Fuel that is drawn out from a fuel tank by the low-pressure fuel pump is injected at a high pressure to the common rail 18 by the high-pressure fuel pump, and is accumulated therein.

The common rail 18 is a container that accumulates high-pressure fuel to be supplied to the injectors 17. The fuel pumped out from the high-pressure fuel pump is accumulated up to the pressure required for injection in the common rail 18, and is then supplied to the injectors 17 of the respective fuel chambers through high-pressure pipes. The common rail 18 also includes a rail pressure sensor and a pressure reducing valve. When the fuel pressure inside the common rail 18 that is output from the rail pressure sensor exceeds a predetermined value, the engine ECU 10 issues an instruction to open the pressure reducing valve. As the fuel is discharged from the pressure reducing valve, the common rail pressure is constantly adjusted to the predetermined value or lower. The fuel discharged from the pressure reducing valve is returned to the fuel tank through a relief pipe.

Each of the fuel chambers has one injector 17 attached thereto. The fuel supplied from the common rail 18 through the high-pressure pipes is injected and supplied into the fuel chambers in the engine cylinders by the injectors 17, in accordance with an instruction from the engine ECU 10. Based on the information about the amount of intake air from the airflow meter 43, the information about the position of the piston from the crank angle sensor 41, and the like, the engine ECU 10 determines the amount of fuel injection and the injection timing, and sends a signal to each of the injectors 17. In accordance with the signal from the engine ECU 10, each of the injectors 17 injects the designated amount of fuel at a high pressure into the fuel chamber at the designated injection time. Fuel leaking from the injectors 17 is returned to the fuel tank through the relief pipe. In this case, each of the injectors 17 can be attached to any position of each corresponding fuel chamber in accordance with the specification of the engine 100.

It should be noted that each injector 17 is an example structure of the fuel injection valve of the present invention.

An intake manifold 11 communicating with the respective fuel chambers is connected to each of the fuel chambers of the engine 100. The intake manifold 11 is connected to an air cleaner by the intake passage 12 via the airflow meter 43, the diesel throttle 19, an intercooler, and the compressor of the turbocharger 14, and introduces intake air drawn from the outside of the engine 100 into each of the fuel chambers.

It should be noted that the intake manifold 11 and the intake passage 12 form an example structure of the intake passage of the present invention.

A throttle position sensor 44 is provided at the diesel throttle 19. The airflow meter 43 and the throttle position sensor 44 detect the amount of intake air passing through the intake passage 12 and the degree of opening of the diesel throttle 19, respectively, and transmit detection results to the engine ECU 10. Based on the transmitted detection results, the engine ECU 10 recognizes the amount of intake air to be introduced into the intake manifold 11, and adjusts the degree of opening of the diesel throttle 19, to introduce the intake air required for operating the engine 100 into the fuel chambers.

It is preferable to apply a throttle-by-wire technique using a stepping motor to the diesel throttle 19, but some other mechanism that can arbitrarily change the degree of valve opening of the diesel throttle 19 may be used.

It should be noted that the diesel throttle 19 is an example structure of the throttle valve of the present invention.

Further, the exhaust manifold 13 communicating with the respective fuel chambers is connected to each of the fuel chambers of the engine 100. The exhaust manifold 13 is connected to the exhaust purification device 30 by an exhaust passage 15 via the exhaust turbine of the turbocharger 14, and discharges exhaust gas to the outside of the engine 100 after combustion.

It should be noted that the exhaust manifold 13 and the exhaust passage 15 form an example structure of the exhaust passage of the present invention.

The turbocharger 14 rotates the exhaust turbine by using kinetic energy of exhaust gas, to compress intake air that has passed through the air cleaner and introduce the compressed intake air into the intercooler. The compressed intake air is cooled by the intercooler, and is then introduced into the intake manifold 11.

The turbocharger 14 is a variable nozzle turbocharger (hereinafter referred to as VNT), and has a variable nozzle vane mechanism 141 on the exhaust turbine side. As the degree of opening of the variable nozzle vane mechanism 141 is adjusted, the inflow angle of exhaust gas flowing into the turbine impeller vane is controlled, and the supercharging pressure of the intake air to be introduced into the intake manifold 11 is adjusted. For example, when the degree of opening of the variable nozzle vane mechanism 141 is made smaller, a larger amount of exhaust gas flows into the turbine impeller vane. As a result, the energy availability of exhaust gas becomes higher, and a higher supercharging ratio is achieved. When the degree of opening of the variable nozzle vane mechanism 141 is made larger, a smaller amount of exhaust gas flows into the turbine impeller vane. As a result, the energy availability of exhaust gas becomes lower, and the supercharging ratio also becomes lower. In this case, the turbocharger 14 is not limited to a VNT, but may be a structure that adjusts the supercharging pressure through a wastegate (control of the energy availability of exhaust gas).

It should be noted that the turbocharger 14 is an example structure of the supercharger of the present invention. The variable nozzle vane mechanism 141 is an example structure of the supercharging pressure control unit of the present invention.

The exhaust purification device 30 purifies exhaust gas from the engine 100, and includes the purification catalyst 31 that purifies NOz, HC, and Co in the exhaust gas, and a DPF 32 that collects particulate matter (PM) such as soot.

The purification catalyst 31 is placed on the upstream side of the DPF 32. The purification catalyst 31 is formed by applying an oxidation catalyst to a catalyst carrier of a porous honeycomb structure made of cordierite ceramics, and has a known structure through which exhaust gas can pass. The catalyst carrier of the purification catalyst 31 is not limited to cordierite, and some other known ceramics or metal may be used as the catalyst carrier.

The DPF 32 is placed on the downstream side of the purification catalyst 31, and is a known wall-flow filter made of porous cordierite ceramics. The DPF 32 is not limited to cordierite, but some other ceramics such as silicon carbide (SiC) may be used.

In this case, the exhaust purification device 30 may have the DPF 32 placed on the upstream side, and have the purification catalyst 31 placed on the downstream side. Alternatively, a DPNR (Diesel Particulate NOx Reduction) system formed by combining a particulate filter with a NOx storage-reduction catalyst may be used as the exhaust purification device 30.

The temperature sensor 42 is provided on the purification catalyst 31 of the exhaust purification device 30. The temperature sensor 42 detects floor temperature of the purification catalyst 31, and transmits the detection result to the engine ECU 10. Based on the transmitted detection result, the engine ECU 10 recognizes actual temperature of the purification catalyst 31, and determines whether the temperature of the purification catalyst 31 is equal to or higher than an activating temperature. In this case, the temperature sensor 42 is not necessarily placed at the above mentioned area, but may be placed in some other area on the purification catalyst 31. One or more temperature sensors 42 may be provided, or the temperature sensor 42 may be separately provided only for detecting floor temperature of the DPF 32. Alternatively, the temperature sensor 42 is not necessarily used, and some other structure that detects temperature of the purification catalyst 31 by calculating the temperature of the purification catalyst from the fuel injection amount and the fuel injection time of the engine 100.

It should be noted that the temperature sensor 42 is an example structure of the temperature detecting unit of the present invention.

The exhaust manifold 13 communicates with the intake manifold 11 through the EGR passage 16. Exhaust gas that flows into the EGR passage 16 is cooled by an EGR cooler 161, and then has its flow rate adjusted by an EGR valve 162. The exhaust gas then reaches the intake manifold 11, and is introduced, together with intake air, into the fuel chambers. The EGR valve 162 adjusts the degree of valve opening in accordance with an instruction from the engine ECU 10, to adjust the amount of exhaust gas returning to the intake manifold 11 to an appropriate amount. As an appropriate amount of EGR gas in accordance with an operation status is returned to the intake manifold 11, combustion temperature of the engine 100 can be lowered, and NOx emissions can be reduced.

It should be noted that the EGR passage 16 is an example structure of the exhaust gas recirculation passage of the present invention.

A shutoff valve 163 is provided at a connecting portion between the exhaust manifold 13 and the EGR passage 16, or at the exhaust gas inlet portion of the EGR passage 16. The shutoff valve 163 is designed to be able to shut off the EGR passage 16 in accordance with an instruction from the engine ECU 10. As the EGR passage 16 is shut off by the shutoff valve 163, the exhaust-system volume of the engine 100 (the sum of the volumes of the exhaust manifold 13, the exhaust passage 15, and the EGR passage 16) can be reduced by the amount equal to the volume of the EGR passage 16. Also, as the EGR passage 16 is shut off by the shutoff valve 163, the amount of exhaust gas flowing into the turbocharger 14 and the exhaust purification device 30 can be increased. In this case, the shutoff valve 163 can be placed at any portion of the EGR passage 16. However, if the shutoff valve 163 is placed at the exhaust gas inlet portion of the EGR passage 16, the amount of exhaust gas flowing into the turbocharger 14 and the exhaust purification device 30 can be more promptly and appropriately increased.

It should be noted that the shutoff valve 163 is an example structure of the inflow control unit of the present invention.

The engine ECU 10 is a computer that includes a CPU (Central Processing Unit) that performs arithmetic operations, a ROM (Read Only Memory) that stores programs and the like, and a RAM (Random Access Memory) and a NVRAM (Non-Volatile RAM) that store data and the like. The engine ECU 10 reads detection results from the sensors provided in the respective components of the engine 100, and, based on those detection results, integrally controls operations of the engine 100.

The engine ECU 10 also controls the electric VVT mechanism 26 and the hydraulic VVT mechanism 27, to adjust the valve overlap periods between the intake valve 22 and the exhaust valve 23. In this manner, the engine ECU 10 performs control to increase volumetric efficiency of the engine 100. In the following, the control to be performed by the engine ECU 10 to increase volumetric efficiency is described.

When there is a request for an increase in volumetric efficiency of the engine 100 (such as a request for an increase in vehicle speed, for example), the engine ECU 10 recognizes the rotation frequency and the amount of intake air of the engine 100 from the detection results received from the crank angle sensor 41 and the airflow meter 43. Based on the recognized rotation frequency and intake air amount of the engine 100, the electric VVT mechanism 26 and the hydraulic VVT mechanism 27 are controlled in the manner described in the following (1) and (2). (1) The valve opening timings of the intake valve 22 and the exhaust valve 23 are adjusted so that the bottom edges of the exhaust pulse fall in the neighborhood of the top dead center (TDC) of exhaust air from the engine 100. (2) The valve overlap periods between the intake valve 22 and the exhaust valve 23 are adjusted so as to match the bottom edges of the exhaust pulse that has shifted to a region in the neighborhood of the TDC. In this case, the engine ECU 10 preferably controls the electric VVT mechanism 26 and the hydraulic VVT mechanism 27, based on a correlation map that is created beforehand in a bench test or the like.

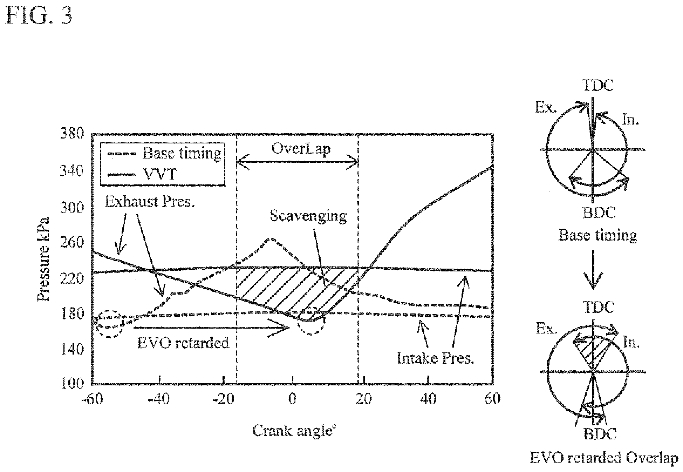

FIG. 3 shows examples of correlations between the crank angle and the intake and exhaust pressures of the engine 100. The intake pressure of the internal combustion engine stays substantially at a constant value, regardless of the crank angle. On the other hand, the exhaust pressure cyclically varies (pulsates) with intermittent emission of exhaust gas from each fuel chamber. The phase of this exhaust pulse varies with changes in the engine rotation frequency and the amount of intake air, but also greatly varies with the valve opening timings of the intake valve 22 and the exhaust valve 23. For example, as the opening of the exhaust valve 23 lags behind, exhaust gas introduction into the exhaust manifold 13 also lags behind, and the phase of the exhaust pulse shifts to the TDC side (the right side in FIG. 3). In this manner, the phase of the exhaust pulse can be controlled by changing the valve opening timings of the intake valve 22 and the exhaust valve 23.

The valve overlap periods between the intake valve 22 and the exhaust valve 23 are adjusted so as to match the bottom edges of the exhaust pulse that has shifted to a region near the neighborhood of the top dead center (TDC) of exhaust air. In this manner, the intake pressure can be made higher than the exhaust pressure during the valve overlap periods. Accordingly, intake air can easily flow into the fuel chamber through the intake valve 22, and exhaust gas in the fuel chamber can be easily discharged through the exhaust valve 23 by virtue of the intake air that has flowed into the fuel chamber. That is, a scavenging effect can be achieved.

In addition to the above described control, the engine ECU 10 instructs the shutoff valve 163 to shut off the EGR passage 16, to reduce the exhaust-system volume of the engine 100 by the amount equal to the volume of the EGR passage 16. In this manner, control to increase the amplitude of the exhaust pulse is performed.

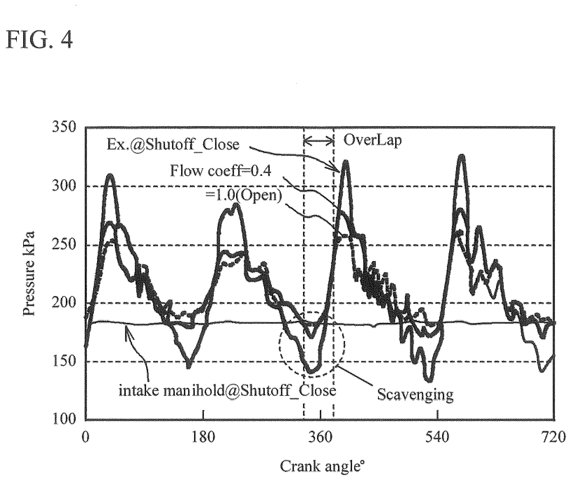

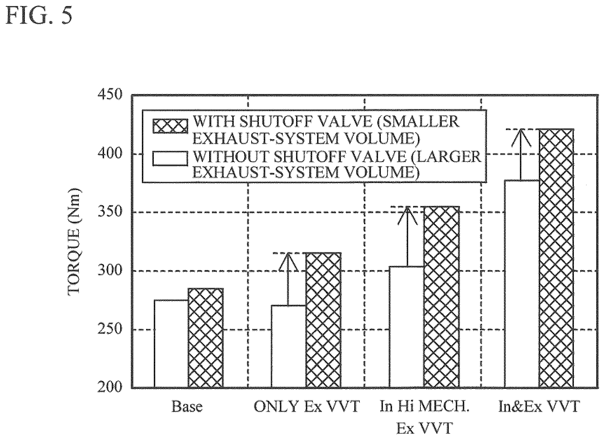

FIG. 4 shows an example of a correlation between the exhaust-system volume of the engine 100 and the amplitude of the exhaust pulse, and FIG. 5 shows an example of a correlation between the exhaust-system volume of the engine 100 and the engine output. As shown in FIG. 4, when the EGR passage 16 is shut off by the shutoff valve 163, the amplitude of the exhaust pulse of the engine 100 becomes larger. As shown in FIG. 5, the EGR passage 16 is shut off by the shutoff valve 163, the output of the engine 100 is improved. That is, when the EGR passage 16 is shut off by the shutoff valve 163 (when the exhaust-system volume is reduced), the amplitude of the exhaust pulse becomes larger (the exhaust pulse is intensified). As a result, the scavenging effect of the engine 100 becomes greater, and the engine output is further improved. That is, the volumetric efficiency of the engine 100 is further increased. In this manner, the volumetric efficiency can be further increased by reducing the exhaust-system volume of the engine 100. In this case, to further intensify the exhaust pulse of the engine 100, the shutoff valve 163 is preferably placed in such a position as to further reduce the exhaust-system volume (such as a position near the exhaust gas inlet portion of the EGR passage 16).

Further, when the temperature of the exhaust purification device 30 is lower than a predetermined threshold value, the engine ECU 10 shuts off the EGR passage 16, and performs warm-up control to accelerate a temperature rise in the exhaust purification device 30. In the following, the warm-up control to be performed by the engine ECU 10 on the exhaust purification device 30 is described.

Based on a result of detection performed by the temperature sensor 42, the engine ECU 10 recognizes the temperature of the exhaust purification device 30 (particularly, the purification catalyst 31). The engine ECU 10 then determines whether the temperature of the purification catalyst 31 is lower than the predetermined threshold value. Here, the threshold value of the temperature of the purification catalyst 31 may be any temperature (200°C, for example) at which the purification catalyst 31 is put into an active state.

When the temperature of the purification catalyst 31 is lower than the predetermined threshold value, the engine ECU 10 instructs the shutoff valve 163 to shut off the EGR passage 16, so that the exhaust gas that was to flow into the EGR passage 16 flows into the exhaust passage 15. With that, the amount of exhaust gas to flow into the turbocharger 14 and the exhaust purification device 30 through the exhaust passage 15 is increased, and a rise in the temperature of the purification catalyst 31 is accelerated. In this case, the engine ECU 10 issues a shutoff instruction to the shutoff valve 163, regardless of whether there is a request for an increase in the volumetric volume of the engine 100.

The engine ECU 10 then recognizes an output of the engine 100 from a detection result received from the crank angle sensor 41, and determines whether the recognized engine output is smaller than a predetermined value. Here, an output of the engine 100 may be at least one of engine rotation frequency, shaft torque, and the like calculated from the result of detection performed by the crank angle sensor 41, but an output may be recognized from an exhaust gas temperature, for example. Meanwhile, the predetermined value for the output of the engine 100 may be any engine output with which the exhaust gas temperature of the engine 100 becomes sufficiently high (250°C, for example) for heating the purification catalyst 31 to an active state.

When the engine output is smaller than the predetermined value (or is in a low-power range), the engine ECU 10 issues an instruction to reduce the degree of opening of (or to fully close, for example) the variable nozzle vane mechanism 141 of the turbocharger 14. With that, the amount of exhaust gas to flow into the turbine impeller vane is increased, and the supercharging efficiency of the turbocharger 14 is improved. Accordingly, the amount of intake air of the engine 100 is increased. Based on detection results received from the airflow meter 43 and the throttle position sensor 44, the engine ECU 10 then adjusts the degree of valve opening of the diesel throttle 19 in accordance with the increased amount of intake air. Specifically, the engine ECU 10 issues an instruction to reduce (throttle) the valve opening of the diesel throttle 19, so as to correct and adjust the increased amount of intake air to an appropriate value (a target value of the amount of intake air to flow into the fuel chamber). With that, the pressure difference between the upstream side and the downstream side of the diesel throttle 19 is made larger, and pumping loss is caused and increased in the engine 100. The engine ECU 10 then issues an instruction to increase the amount of fuel injection from the injectors 17, so as to correct the decrease in engine output due to the pumping loss caused by the throttling of the diesel throttle 19. Specifically, the amount of fuel injection from the injectors 17 is increased so that the output of the engine 100 reduced by the pumping loss would approximate the target output. In this case, the control of the valve opening of the diesel throttle 19 is not limited to the throttling equivalent to the amount by which the amount of intake air is corrected and adjusted to the target value, but more throttling may be performed in accordance with the exhaust gas temperature or the like. The degree of opening of the variable nozzle vane mechanism 141 of the turbocharger 14 may not be changed.

To accelerate the temperature rise in the exhaust purification device (the purification catalyst) or to raise the exhaust gas temperature, it is effective to increase the amount of fuel injection. In a case where the internal combustion engine is located in a low-power range (during a warm-up operation or the like), however, the purification catalyst is in a low-temperature state (an inactive state), and therefore, exhaust gas cannot be appropriately purified. In view of this, to prevent emission degradation, control to reduce the amount of fuel injection is normally performed in the low-power range of the internal combustion engine in such a manner as not to affect torque requested by the driver. Therefore, it is difficult to promptly increase the amount of fuel injection and raise the exhaust gas temperature.

In view of this, when the engine output is smaller than the predetermined value, the engine system 1 of this embodiment reduces the degree of opening of the diesel throttle 19 while increasing the supercharging efficiency of the turbocharger 14 by shutting off the EGR passage 16 with the shutoff valve 163. As a result, the pumping loss in the engine 100 is increased, and the engine output is reduced. The control to increase the amount of fuel injection can be then performed to correct the reduced engine output. Accordingly, the temperature of exhaust gas flowing into the exhaust purification device 30 can be appropriately raised in the low-power range of the engine 100.

When the engine output is equal to or greater than the predetermined value (or is in a medium/high-power range), the engine ECU 10 issues an instruction to increase the degree of opening of (or to fully open, for example) the variable nozzle vane mechanism of the turbocharger 14. With that, the energy availability of exhaust gas in the turbocharger 14 is lowered.

When the internal combustion engine is in the medium/high-power range, the exhaust gas discharged from the fuel chamber has a temperature or an energy sufficiently high for heating the exhaust purification device (the purification catalyst) to an active state. When the exhaust gas passes through the turbocharger, however, part of the energy is transformed into a rotational energy, and the temperature thereof drops. As a result, the temperature rise effect in the exhaust purification device becomes smaller.

In view of this, when the engine output is equal to or greater than the predetermined value, the engine system 1 of this embodiment increases the degree of opening of the variable nozzle vane mechanism 141 while increasing the amount of exhaust gas flowing into the exhaust purification device 30 by shutting off the EGR passage 16 with the shutoff valve 163. With that, the energy availability of exhaust gas at the turbocharger 14 is lowered, and a large amount of exhaust gas having a higher energy (a higher temperature) can be made to flow into the exhaust purification device 30. Thus, the temperature of the exhaust purification device 30 can be appropriately raised in the medium/high-power range of the engine 100.

As described above, when the temperature of the exhaust purification device 30 is lower than the predetermined threshold value, the engine system 1 of this embodiment can perform the control to accelerate a temperature rise in the exhaust purification device 30 by shutting off the EGR passage 16 with the shutoff valve 163.

It should be noted that the engine ECU 10 is an example structure of the inflow control unit, the valve opening control unit, the fuel injection amount control unit, and the supercharging pressure control unit of the present invention.

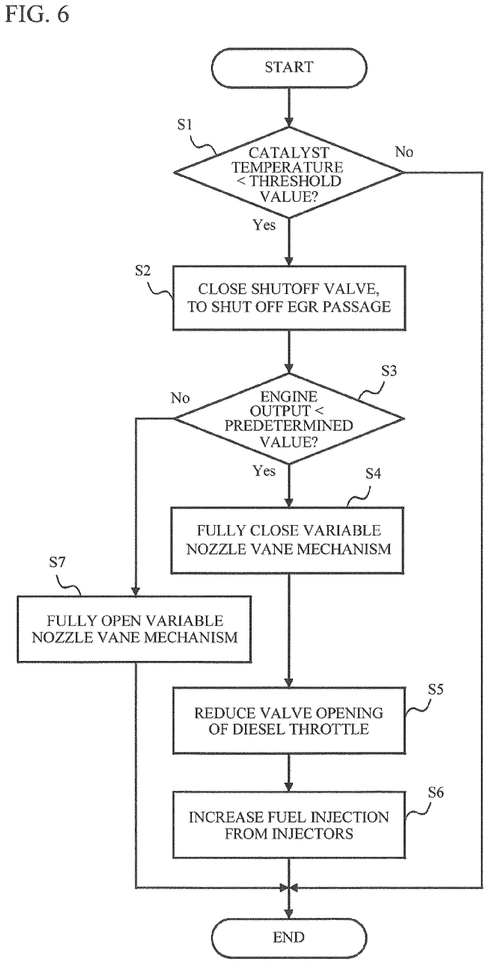

Operations of the engine system 1 are further described in conjunction with a control flow of the engine ECU 10. FIG. 6 is a flowchart showing an example operation of the engine ECU 10. The engine system 1 of this embodiment includes the shutoff valve 163 that can shut off the EGR passage 16 and the temperature sensor 42 that detects the temperature of the exhaust purification device 30. When the temperature of the exhaust purification device 30 is lower than the predetermined threshold value, the engine ECU 10 performs the control to shut off the EGR passage 16 with the shutoff valve 163.

The control by the engine ECU 10 starts when the ignition switch is turned on to start the engine 100. While the engine 100 is in operation, the control operation described below is repeated. Also, during the control operation, the engine ECU 10 constantly receives detection results from the crank angle sensor 41, the temperature sensor 42, the airflow meter 43, and the throttle position sensor 44.

First, in step S1, the engine ECU 10 determines whether the detection result received from the temperature sensor 42 is smaller than the predetermined threshold value. The predetermined threshold value has been described above, and therefore, is not explained herein. If the detection result received from the temperature sensor 42 is not smaller than the predetermined threshold value (step S1: NO), the engine ECU 10 determines that there is no need to accelerate a temperature rise in the exhaust purification device 30, and ends the control operation. If the detection result received from the temperature sensor 42 is smaller than the predetermined threshold value (step S1: YES), the engine ECU 10 determines that the temperature rise in the exhaust purification device 30 needs to be accelerated, and moves on to the next step S2.

In step S2, the engine ECU 10 instructs the shutoff valve 163 to shut off the EGR passage 16, so that the exhaust gas that was to flow into the EGR passage 16 flows into the exhaust passage 15. After finishing the procedure of step S2, the engine ECU 10 moves on to the next step S3.

In step S3, the engine ECU 10 recognizes an output of the engine 100 from a detection result received from the crank angle sensor 41, and determines whether the recognized engine output is smaller than the predetermined value. The predetermined value for the engine output has been described above, and therefore, is not described in detail herein. If the engine output is not smaller than the predetermined value (step S3: NO), the engine ECU 10 determines that the exhaust gas temperature of the engine 100 has reached to a temperature high enough to heat the purification catalyst to an active state, and moves on to step S7. If the engine output is smaller than the predetermined value (step S3: YES), the engine ECU 10 determines that the exhaust gas temperature of the engine 100 has not reached to a temperature high enough to heat the purification catalyst 31 to an active state, and moves on to the next step S4.

In step S4, the engine ECU 10 issues an instruction to fully close the variable nozzle vane mechanism 141, so that the supercharging efficiency of the turbocharger 14 is improved, and the amount of intake air is increased. After finishing the procedure of step S4, the engine ECU 10 moves on to the next step S5.

In step S5, the engine ECU 10 issues an instruction to reduce the degree of valve opening of the diesel throttle 19, so as to correct and adjust the increased amount of intake air to a target value, based on detection results received from the airflow meter 43 and the throttle position sensor 44. After finishing the procedure of step S5, the engine ECU 10 moves on to the next step S6.

In step S6, the engine ECU 10 recognizes a decrease in the output of the engine 100 due to pumping loss caused by the procedure of step S5, from the detection result received from the crank angle sensor 41. The engine ECU 10 then instructs the injectors 17 to increase the amount of fuel injection, so as to correct and adjust the output of the engine 100 to the target value. After finishing the procedure of step S6, the engine ECU 10 ends the control operation.

If the determination result of step S3 is NO, the engine ECU 10 moves on to step S7. In step S7, the engine ECU 10 issues an instruction to fully open the variable nozzle vane mechanism 141, so that the energy availability of exhaust gas at the turbocharger 14 is lowered. After finishing the procedure of step S7, the engine ECU 10 ends the control operation.

As this control is performed, the EGR passage 16 is shut off by the shutoff valve 163 when the purification catalyst 31 is in an inactive state, so that the temperature rise in the exhaust purification device 30 can be appropriately accelerated. Thus, warm-up of the exhaust purification device in the internal combustion engine that can change its exhaust-system volume can be accelerated.

It should be noted the engine ECU 10 may not carry out the procedure of step S4.

As described above, the engine system of this embodiment includes the engine ECU, the shutoff valve that can shut off the EGR passage, and the temperature sensor that detects the temperature of the exhaust purification device. When the temperature of the exhaust purification device is lower than a predetermined threshold value, the engine system shuts off the EGR passage with the shutoff valve. In this manner, the temperature rise in the exhaust purification device can be accelerated.

When an output of the engine is smaller than a predetermined value, the engine system of this embodiment reduces the degree of valve opening of the diesel throttle, to increase the amount of fuel injection from the injectors. With that, the temperature rise in the exhaust purification device can be effectively accelerated in the low-power range of the engine. When the output of the engine is equal to or greater than the predetermined value, on the other hand, the degree of opening of the variable nozzle vane mechanism of the turbocharger is made larger. Thus, the temperature rise in the exhaust purification device can be more effectively accelerated in the medium/high-power range of the engine.

The above described embodiment is merely an example for carrying out the present invention. Therefore, the present invention is not limited to the above, and various changes and modifications may be made to it within the scope of the appended claims.

For example, the scope of the present invention is not limited to internal combustion engines that have variable valve timing mechanisms such as VVT mechanisms. That is, the scope of the present invention is not limited to internal combustion engines that perform the control to increase volumetric efficiency.

**[DESCRIPTION OF LETTERS OR NUMERALS]**

| | |
|---|---|
| engine system | 1 |
| engine ECU (inflow control unit, valve opening control unit, fuel injection amount control unit, supercharging pressure control unit) | 10 |
| exhaust manifold | 13 |
| turbocharger (supercharger) | 14 |
| exhaust passage | 15 |
| EGR passage | 16 |
| injector (fuel injection valve) | 17 |
| diesel throttle (throttle valve) | 19 |
| exhaust purification device | 30 |
| purification catalyst | 31 |
| crank angle sensor (output detecting unit) | 41 |
| temperature sensor (temperature detecting unit) | 42 |
| engine | 100 |
| variable nozzle vane mechanism (energy recovery rate adjusting unit) | 141 |
| shutoff valve (inflow control unit) | 163 |

## Claims

1. A control apparatus for an internal combustion engine (100), comprising:
an exhaust purification device (30) purifying exhaust gas from the internal combustion engine (100), the exhaust purification device (30) being provided in an exhaust passage (13, 15) of the internal combustion engine (100);
an EGR passage (16) provided with an EGR valve (162) that causes the exhaust passage (13, 15) on an upstream side of the exhaust purification device (30) to communicate with an intake passage (11, 12) to return part of the exhaust gas to the intake passage (11, 12) and thus adjusts an amount of the exhaust gas returning to the intake passage (11, 12);
a shutoff valve (163) that is provided near an exhaust gas inlet portion of the EGR passage (16) and is capable of reducing an exhaust-system volume that is a sum of volumes of the exhaust manifold (13), the exhaust passage (15) and the EGR passage (16) of the internal combustion engine (100) by shutting off the EGR passage (16); and
temperature detecting means (42) detecting a temperature of a purification catalyst (31) of the exhaust gas purification device (30),
wherein, when a result of the detection performed by the temperature detecting means (42) is smaller than a predetermined threshold value that is an arbitrary temperature at which the purification catalyst (31) is put into an activate state, the shutoff valve (163) shuts off the EGR passage (16) to reduce the exhaust-system volume, and thus increases an amplitude of an exhaust pulse of the exhaust gas flowing into the exhaust gas purification device (30),
**characterized by** further comprising:
a supercharger (14) performing supercharging with intake air by using exhaust gas energy, the supercharger (14) being provided in the exhaust passage (13, 15) located on a downstream side of the EGR passage (16) and on the upstream side of the exhaust purification device (30), the supercharger (14) having a variable nozzle vane mechanism (141);
a supercharging pressure control unit (10) controlling a supercharging pressure of the intake air by changing energy availability of exhaust gas at the supercharger (14) by controlling the degree of opening of the variable nozzle vane mechanism (141); and
an output detecting unit (41) detecting on output of the internal combustion engine (100),
wherein, when the result of the detection performed by the temperature detecting unit (42) is smaller than the predetermined threshold value, and a result of the detection performed by the output detecting unit (41) is equal to or greater than a predetermined threshold value, the supercharging pressure control unit (10) lowers the energy availability of the exhaust gas at the supercharger (14) by increasing the degree of opening of the variable nozzle vane mechanism (141).

## Patentansprüche

1. Eine Steuerungsvorrichtung für einen Motor (100) mit interner Verbrennung, aufweisend:
eine Ausstoßreinigungsvorrichtung (30), welche ein Ausstoßgas von dem Motor (100) mit interner Verbrennung reinigt, wobei die Ausstoßreinigungsvorrichtung (30) in einer Ausstoßleitung (13, 15) des Motors (100) mit interner Verbrennung vorgesehen ist;
eine EGR-Leitung (16), die mit einem EGR-Ventil (162) versehen ist, welches verursacht, dass die Ausstoßleitung (13, 15) an einer stromaufwärtigen Seite der Ausstoßreinigungsvorrichtung (30) mit einer Ansaugleitung (11, 12) kommunizierend verbunden wird, um einen Teil des Ausstoßgases zu der Ansaugleitung (11, 12) zurück zu leiten, und welches somit eine Menge des zu der Ansaugleitung (11, 12) zurück geleiteten Ausstoßgases einstellt;
ein Absperrventil (163), welches nahe einen Ausstoßgaseinlassbereich der EGR-Leitung (16) vorgesehen ist, und welches dazu in der Lage ist, ein Ausstoßsystemvolumen, welches eine Summe der Volumina des Ausstoßkrümmers (13), der Ausstoßleitung (15) und der EGR-Leitung (16) des Motors (100) mit interner Verbrennung ist, durch ein Absperren der EGR-Leitung (16) zu reduzieren; und
ein Temperaturerfassungsmittel (42), welches eine Temperatur eines Reinigungskatalysators (31) der Ausstoßgasreinigungsvorrichtung (30) erfasst,
wobei dann, wenn ein Ergebnis der durch das Temperaturerfassungsmittel (42) durchgeführten Erfassung kleiner als ein vorab bestimmter Schwellwert ist, welcher eine willkürliche Temperatur ist, bei welcher der Reinigungskatalysator (31) in einen aktivierten Zustand versetzt ist, das Absperrventil (163) die EGR-Leitung (16) absperrt, um das Ausstoßsystemvolumen zu reduzieren, und es somit eine Amplitude eines Ausstoßpulses des in die Ausstoßgasreinigungsvorrichtung (30) strömenden Ausstoßgases vergrößert,
**dadurch gekennzeichnet, dass** sie darüber hinaus aufweist:
einen Auflader (14), welcher ein Aufladen mit einer Ansaugluft durch Verwenden einer Ausstoßgasenergie durchführt, wobei der Auflader (14) in der Ausstoßleitung (13, 15) an einer stromabwärtigen Seite der EGR-Leitung (16) und an der stromaufwärtigen Seite der Ausstoßreinigungsvorrichtung (30) angeordnet vorgesehen ist, wobei der Auflader (14) einen Mechanismus (141) mit veränderlicher Düsenschaufel aufweist;
eine Aufladungsdrucksteuerungseinheit (10), welche einen Aufladungsdruck der Ansaugluft durch ein Ändern einer Energieverfügbarkeit des Ausstoßgases an dem Auflader (14) durch ein Steuern des Grades der Öffnung des Mechanismus (141) mit veränderlicher Düsenschaufel steuert; und
eine Abgabeerfassungseinheit (41), welche eine Abgabe des Motors (100) mit interner Verbrennung erfasst,
wobei dann, wenn das Ergebnis der durch die Temperaturerfassungseinheit (42) durchgeführten Erfassung kleiner als der vorab bestimmte Schwellwert ist, und ein Ergebnis der durch die Abgabeerfassungseinheit (41) durchgeführten Erfassung gleich wie oder größer als ein vorab bestimmter Schwellwert ist, die Aufladungsdrucksteuerungseinheit (10) die Energieverfügbarkeit des Ausstoßgases an dem Auflader (14) durch ein Vergrößern des Grades einer Öffnung des Mechanismus (141) mit veränderlicher Düsenschaufel verringert.

## Revendications

1. Dispositif de commande pour un moteur à combustion interne (100), comprenant :
un dispositif de purification d'échappement (30) purifiant un gaz d'échappement venant du moteur à combustion interne (100), le dispositif de purification d'échappement (30) étant placé dans un passage d'échappement (13, 15) du moteur à combustion interne (100) ;
un passage d'EGR (16) pourvu d'une soupape d'EGR (162) qui fait communiquer le passage d'échappement (13, 15) sur un côté amont du dispositif de purification d'échappement (30) avec un passage d'admission (11, 12) pour faire retourner une partie du gaz d'échappement vers le passage d'admission (11, 12) et ainsi ajuster une quantité du gaz d'échappement retournant vers le passage d'admission (11, 12) ;
une vanne de fermeture (163) qui est placée près d'une partie d'orifice d'entrée de gaz d'échappement du passage d'EGR (16) et peut réduire un volume de système d'échappement qui est une somme des volumes du collecteur d'échappement (13), du passage d'échappement (15) et du passage d'EGR (16) du moteur à combustion interne (100) en fermant le passage d'EGR (16) ; et
des moyens de détection de température (42) détectant une température d'un catalyseur de purification (31) du dispositif de purification d'échappement (30),
dans lequel, quand un résultat de la détection réalisée par les moyens de détection de température (42) est inférieur à une valeur de seuil prédéterminée qui est une température arbitraire à laquelle le catalyseur de purification (31) est mis dans un état activé, la vanne de fermeture (163) ferme le passage d'EGR (16) pour réduire le volume du système d'échappement, et ainsi augmenter une amplitude d'une pulsation d'échappement du gaz d'échappement s'écoulant dans le dispositif de purification d'échappement (30),
**caractérisé en ce qu'**il comprend en outre :
un suralimenteur (14) réalisant une suralimentation avec l'air d'admission en utilisant l'énergie du gaz d'échappement, le suralimenteur (14) étant placé dans le passage d'échappement (13, 15) situé sur le côté aval du passage d'EGR (16) et sur le côté amont du dispositif de purification d'échappement (30), le suralimenteur (14) comportant un mécanisme de volet de turbine variable (141) ;
une unité de commande de pression de suralimentation (10) commandant une pression de suralimentation de l'air d'admission en changeant une disponibilité d'énergie du gaz d'échappement au niveau du suralimenteur (14) en commandant le degré d'ouverture du mécanisme de volet de turbine variable (141) ; et
une unité de détection de sortie (41) détectant sur la sortie du moteur à combustion interne (100),
dans lequel, quand le résultat de la détection réalisée par l'unité de détection de température (42) est inférieur à la valeur de seuil prédéterminée, et un résultat de la détection réalisée par l'unité de détection de sortie (41) est supérieur ou égal à une valeur de seuil prédéterminée, l'unité de commande de pression de suralimentation (10) abaisse la disponibilité d'énergie du gaz d'échappement au niveau du suralimenteur (14) en augmentant le degré d'ouverture du mécanisme de volet de turbine variable (141).
